(19)

Europäisches Patentamt
European Patent Office
Office européen des brevets

(11) **EP 1 887 034 B1**

(12) **EUROPEAN PATENT SPECIFICATION**

(45) Date of publication and mention of the grant of the patent:
**28.01.2009 Bulletin 2009/05**

(51) Int Cl.:
*C08K 5/20* (2006.01)     *C08K 5/3435* (2006.01)

(21) Application number: **06016022.3**

(22) Date of filing: **01.08.2006**

(54) **Process for the production of impact resistant pipe**

Verfahren zur Herstellung schlagfester Rohre

Procédé pour la préparation de conduites à résistance aux chocs

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**13.02.2008 Bulletin 2008/07**

(73) Proprietor: **Borealis Technology Oy**
**06101 Porvoo (FI)**

(72) Inventors:
• **Gahleitner, Markus**
**4501 Neuhofen a.d. Krems (AT)**
• **Liedauer, Siegfried**
**4073 Wilhering (AT)**
• **Ruemer, Franz**
**4222 St. Georgen/Gusen (AT)**
• **Jansen, Norbert**
**41849 Wassenberg (DE)**

• **Gard, Reinhold**
**47130 Skärhamm (SE)**
• **Alastalo, Kauno**
**06400 Porvoo (FI)**

(74) Representative: **Kador & Partner**
**Corneliusstrasse 15**
**80469 München (DE)**

(56) References cited:
**EP-A- 1 364 986**      **WO-A-99/40151**
**WO-A-03/102069**      **WO-A-20/04014999**
**WO-A2-03/094832**

Remarks:
The file contains technical information submitted after the application was filed and not included in this specification

**Description**

The present invention relates to a process for producing a pipe comprising a polypropylene (PP) layer and a pipe with an increased impact resistance.

Polypropylene is used in many polymeric articles due to its good mechanical properties. Examples of such articles are pipes produced by melt extrusion or fittings produced by injection moulding.

It is well-known that an improvement of the impact strength in technical polymer articles can be achieved by the selective production of the beta-modification in crystalline isotactic polypropylene, which is especially significant for low temperature applications.

Chen et al. (Polymer 43 (2002) 6505-14) describe such an improvement in impact strength. Beta-phase PP-homopolymers and PP-impact copolymers showed a superior toughness as compared to the alpha-versions. The crystallinity of the alpha- and beta-modifications was assessed by wide-angle X-ray scattering (WAXS).

Special nucleating agents favouring the formation of the beta-phase can be applied for this purpose by melt compounding these substances into the polypropylene material. Suitable substances and concentrations are described in Fujiyama et al. (Intern. Polym. Proc. 11 (1996) 271-4).

For example, EP 0 682 066 B2 discloses a process for increasing the content of the beta-modification in polypropylene (PP), which comprises melting the PP with salts of dicarboxylic acids (I) to act as beta-nucleating agents, and then cooling the mixture.

WO 03/094832 A2 refers to a method for enhancing the fraction of beta-crystal modification in polypropylene compositions by compounding nanocrystalline substances like iron oxides.

Further, WO 03/102069 A discloses a polypropylene composition with a content of beta-crystals of at least 10 % comprising a crystalline polypropylene and at least one beta-nucleating agent referring to a 1,3,5-benzenetricarboxylic acid derivative.

Furthermore, EP 1 364 986 A1 relates to filled propylene compositions especially for pipes and pipe systems having increased impact and stiffness properties. These propylene homopolymers or propylene block copolymers are beta-nucleated, but also contain 1-70% of a filler, such as talc, calcium carbonate, glass spheres, mica, etc., while having a beta-crystalline phase $K_\beta$ of higher or equal to 30%, as measured by Differential Scanning Calorimetry (DSC).

In summary, the documents listed describe methods to increase the beta-modification content in PP compositions and to generate products such as pipes from the thus gained polymers resins.

However, while in the state-of-art the beta-phase content of the polypropylene compositions is discussed and considered to be relevant for the eventually produced parts including pipes, the final pipe products may not actually achieve this level of beta-phase content. Although the polymer compositions employed may contain a high level of beta-content, the produced pipes from these compositions displayed low or decreased levels of the beta-modification and also lower impact strengths. Apparently, the production process plays a significant role in achieving or maintaining high beta-phase levels in the produced pipes.

The object of the invention is therefore to provide pipes comprising polypropylene with improved properties, in particular a high impact strength, especially for low temperature applications, and a process for the production of such pipes.

A further object of the invention is to provide pipes comprising polypropylene with an increased proportion of beta-phase content in the final pipe products, and a process for the production thereof.

Surprisingly, it was found that the above-stated objects can be achieved by employing the specific processing conditions as described below for pipe materials during and after extrusion of the pipe.

Therefore, the present invention provides a process for producing a pipe comprising at least one layer made of a polypropylene composition comprising a beta-nucleated polypropylene base resin, wherein the process comprises the steps of:

a) extrusion of the polypropylene composition at a temperature of above 200 °C,

b) subsequent cooling of the extruded product with a cooling medium having a temperature of above 5 °C, and

c) subsequent annealing of the extruded product with an annealing medium having a temperature of at least the cooling medium temperature of step b)

The term "pipe" as used herein is meant to encompass pipes in a broader sense, including supplementary parts like fittings, valves, chambers and all parts, which are commonly necessary for e.g. a sewage piping system. Pipes according to the invention also encompass single and multilayer pipes, where for example one or more of the layers is a metal layer and pipes, which may include an adhesive layer. Other constructions of pipes, e.g. corrugated pipes, double wall pipes with or without hollow sections, are possible as well.

By the term "random copolymer" is meant herein that the comonomer in said copolymer is distributed randomly, i.e. by statistical insertion of the comonomer units, within the copolymer chain.

For beta nucleating of polypropylene usually a beta-nucleating agent is used. Preferably, for beta nucleating the polypropylene base resin the polypropylene composition comprises and a beta-nucleating agent in an amount of from 20 to 10 000 ppm.

In one preferred embodiment of the inventive process, the extrusion temperature is 205 °C or higher, more preferably is 207 °C or higher, still more preferably is 208 °C or higher, still more preferably is 215 °C or higher, and most preferably is 225 °C or higher.

Usually and preferably, cooling of the extruded pipe in step b) is carried out by passing the pipe, preferably continuously, through a bath comprising the cooling medium, e.g. a liquid cooling medium such as water, or a spray cooling medium comprising liquid and gas, such as water and air.

Preferably, in step b) the cooling medium has a temperature of above 10 °C, more preferably of above 20 °C.

Preferably, the cooling medium in step b) has a temperature of 100 °C or below, more preferably of 50 °C or below, and most preferably of 30 °C or below.

According to an advantageous embodiment, step b) is conducted in a bath of length 0.1 to 20 m, preferably between 1 and 5 m, where the extruded pipe is continuously passed through.

In a preferred embodiment, step b) comprises spray cooling of the extruded product.

Preferably, the cooling medium in step b) is water or in the case of spray cooling a mixture of water and air.

It is preferred that the residence time for step b), i.e. the time during which the extruded pipe is exposed to the cooling medium, is between 2 s and 400 s, more preferably between 10 s and 200 s, still more preferably between 30 s and 120 s, and most preferably between 50 s and 70 s.

Further, it is preferred that the cooling rate in the middle of the pipe wall during the cooling step b) is below 10 K/s, more preferably is below 5 K/s, and most preferably is below 3 °C/s.

The lower limit of the cooling rate is not critical, however, for practical reasons the cooling rate in the middle of the pipe wall during the cooling stage b) usually is 0.01 °C/s or higher.

Preferably, the pipe after cooling step b) has a temperature in the middle of the pipe wall of 50 to 120 °C, more preferably of 60 to 100 °C.

In a preferred embodiment, an additional, intermediate cooling step b2) is performed between step b) and step c) in which the pipe is further cooled with a cooling medium, which may be the same or different to the cooling medium of step b).

Preferably, step b2) comprises exposing the extruded product to air as a cooling medium, e.g. by passing it through an air gap.

Moreover, preferably in step b2) the temperature of the cooling medium is equal to or higher than the temperature of the cooling medium of step b), more preferably is higher than the temperature of the cooling medium of step b).

Preferably, the cooling medium of step b2) has a temperature of above 10 °C, more preferably a temperature of above 20 °C, most preferably a temperature of above 25 °C.

Usually, the cooling medium of step b2) has a temperature of 150 °C or below, more preferably 110 °C or below, still more preferably 60 °C or below, and most preferably 40 °C or below.

It is preferred that the residence time for step b2) is between 2 s and 400 s, more preferably between 10 s and 200 s, still more preferably between 30 s and 120 s, and most preferably between 50 s and 70 s.

According to a preferable embodiment, the step b2) is conducted in an air gap of length 0.1 to 20 m, more preferably of length between 1 and 5 m.

Preferably, in step c) the extruded product is annealed with an annealing medium having a temperature of 15 °C or higher, more preferably of 20 °C or higher, more preferably of 25 °C or higher, more preferably of 30 °C or higher, still more preferably of 50 °C or higher, still more preferably of 70 °C or higher, and most preferably of 80 °C or higher.

Usually, the annealing medium has a temperature below the melting point of the polypropylene used for the production of the pipe, preferably has a temperature of 180 °C or below, more preferably has a temperature of 150 °C or below, still more preferably has a temperature of 120 °C or below, and most preferably has a temperature of 100 °C or below.

Preferably, the temperature in the annealing medium is higher than that in the cooling medium of step b).

Preferably, the temperature in the annealing medium is higher than that in the cooling medium of step b2), if present.

Furthermore, preferably the annealing medium in step c) is water.

Preferably, step c) comprises annealing of the extruded product by passing it, preferably continuously, through the annealing medium, preferably passing it through a water bath.

It is preferred that the residence time for step c) is between 2 s and 300 s, preferably between 5 s and 200 s, more preferably between 10 s and 100 s, most preferably between 20 s and 60 s.

Preferably, step c) is conducted in a bath of length 0.1 to 15 m, more preferably between 1 and 3 m.

Preferably, pipes according to the invention are extruded by feeding the polypropylene composition, preferably prepared as described below, e.g. in pellet form or as a powder, to an extruder. However, direct homogenisation of the polymer base resin together with other additives and subsequent extrusion of the pipes in one step is also possible.

According to the invention, the extrusion process is preferably conducted using a single screw extruder with a length to diameter ratio (L/D) of 20 to 60. More preferably, this is a conventional single-screw pipe extruder. Alternatively, it is preferred to employ twin screw extruders or extruder cascades of homogenizing extruders (single or twin screw). Optionally, a melt pump and/or static mixer can be used additionally between the extruder and the ring die head. Preferably the die has a ring shape with a diameter ranging from approximately 16 to 2000 mm or possibly more.

The melt arriving from the extruder is preferably first distributed over an annular cross-section via conically arranged holes and then fed to the core/die combination via a coil distributor or screen. If necessary, restrictor rings or other structural elements for ensuring uniform melt flow may additionally be installed before the die outlet. After leaving the annular die, the pipe is preferably taken off over a calibrating mandrel, which is accompanied or followed by the subsequent cooling/annealing processes of the invention.

For the production of multi-layered pipes, according to the invention, extruders suitable for multilayer extrusion are preferred. Preferably these are conventional extruders. For example, the polyolefin layers may be manufactured with single screw extruders with an L/D of 20 to 40 or twin screw extruders or other types of extruders suitable for multilayer extrusion, as described for example in US 5 387 386 and FI 83 184.

Optionally, a melt pump and/or a static mixer can be used additionally between the extruder and the ring die head. Ring shaped dies with diameters ranging from approximately 20 to 2000 mm and even greater are possible. After leaving the ring-shaped die, the polyolefin multilayer pipe can be taken off over a calibrating sleeve prior to cooling.

The known methods of multilayer pipe extrusion or injection molding are described for instance, in Djordjevic, D., "Coextrusion", Rapra Review Reports, Vol. 6, No. 2, 1992, pp 51-53, or Plastic Extrusion Technology, Hanser Publishers 1997, Chapter 3 (F. Hensen).

Preferably, the screw speed is between 10 and 300 rpm, more preferably between 30 and 200 rpm, most preferably between 50 and 100 rpm.

Further, preferably the die pressure is between 10 and 500 bar, more preferably between 80 and 200 bar, most preferably between 110 and 150 bar.

In addition, it is preferred that the extrusion line speed is between 0.1 and 50 m/min, preferably between 0.5 and 10 m/min, even more preferably between 1 and 5 m/min, most preferably between 2.5 and 3.5 m/min.

It is preferred, according to the invention that the extruded pipe has a outer diameter of between 10 and 1000 mm, preferably between 16 and 200 mm, more preferably between 32 and 110 mm.

The preferred pipe wall thickness is between 1 and 50 mm, preferably between 2 and 30 mm, more preferably between 2.5 and 20 mm.

The invention also relates to pipes produced by the above-mentioned process.

The presence of the beta-crystallinity can be detected by WAXS (wide angle X-ray diffraction) analysis (cf. Moore, J., Polypropylene Handbook, p. 134-135, Hanser Publishers Munich 1996). This method affords different values for the beta-crystalline fraction than the DSC-measurements (Differential Scanning Calorimetry) and thus the results achieved by these methods are not directly comparable. Moreover, the DSC measurement can itself change the proportion of the beta-fraction, thus falsifying the true value in the final product. More specifically, it is known that at the conventional heating rates employed in DSC measurements (e.g. 10 K/min), annealing processes in the specimen take place between 50°C and the melting temperature, resulting in an apparent increase of the crystalline fraction. Therefore, the beta-crystallinity measurements should be undertaken by WAXS rather than DSC.

The WAXS method affords values for the total crystallinity $X_c$ in % of the total amorphous and crystalline content of the polypropylene composition and the relative beta-phase content $K_\beta$ in % of the alpha and beta crystalline fractions of the polypropylene composition (cf. methods section).

Furthermore, the absolute beta-values ($\beta_{abs}$) of the beta-phase content in % of the total amorphous and crystalline content of the polypropylene composition, for inside ($\beta_{abs, in}$) and outside ($\beta_{abs, out}$) of the pipe wall, are the product of the relative beta-crystallinity ($K_\beta$) as measured close to the inner side and close to the outer side of the pipe wall, respectively, and the total crystallinity ($X_C$):

$$\beta_{abs} = K_\beta * X_C$$

The terms "inner side" and "outer side" of the pipe wall are meant to represent the interior pipe wall surface and the exterior pipe wall surface, respectively.

The average absolute beta-crystallinity ($\beta_{av}$) in %, in a pipe is the arithmetic average between the absolute beta-crystallinity inside ($\beta_{abs, in}$) and outside ($\beta_{abs, out}$) of the pipe wall:

$$\beta_{av} = \frac{\beta_{abs,in} + \beta_{abs,out}}{2}$$

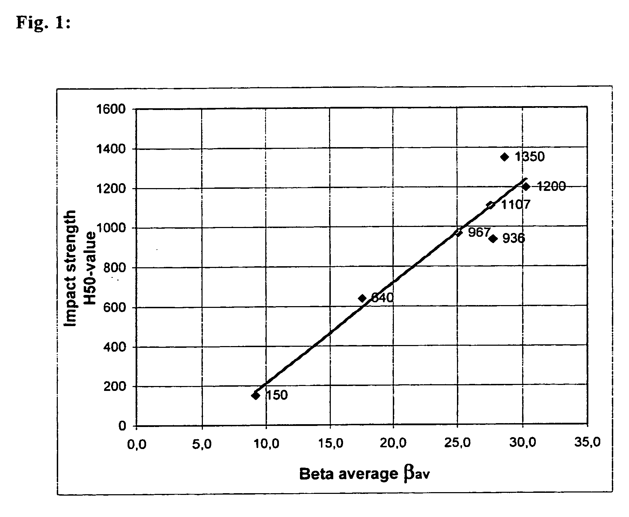

However, it was found that the impact strength of the produced polypropylene pipes, as measured by a falling weight test, is directly proportional to the average beta-crystallinity ($\beta_{av}$), i.e. the product of $X_C$ and $K_\beta$. This can be seen in figure 1, which shows a graph of the impact strength values against the average beta-phase content for each of the inventive and comparative examples. Accordingly, the pipes known in the state of the art do not achieve high levels for both theses parameters and thus lack high impact strengths.

On the other hand, pipes which are produced according to the inventive process show a high beta-phase content, and also a high overall crystallinity.

The invention is thus concerned with pipes comprising at least one layer made of a propylene polymer composition, wherein the average beta-crystallinity of the pipe layer, $\beta_{av}$ is higher or equal to 20 %, as determined according to the WAXS method.

Preferably, the propylene polymer composition comprises a beta-nucleating agent in an amount of 20 to 10 000 ppm.

Preferably, the average beta-crystallinity of the pipe layer, $\beta_{av}$ is 24 % or higher, more preferably is 25 % or higher, more preferably is 27 % or higher, still more preferably is 28 % or higher, and most preferably is 30 % or higher, as determined according to the WAXS method.

Additionally preferred is a pipe, in which the relative beta-crystallinity on the inner side, i.e. in a specimen or zone of 200 $\mu$m depth from the inner side of the pipe layer, $K_\beta$ is 65 % or more, more preferably is 75 % or more, still more preferably is 80 % or more, and most preferably is 85 % or more, as determined according to the WAXS method.

It is also preferred that the absolute beta-crystallinity, $\beta_{abs}$, in in a zone of 200 $\mu$m depth from the inner side of the pipe layer, is 32 % or more, more preferably is 35 % or more, still more preferably is 40 % or more, still more preferably is 44 % or more, and most preferably is 48 % or more, as determined according to the WAXS method.

In a preferred embodiment, the product of the average absolute beta-crystallinity ($\beta_{av}$) and the total crystallinity ($X_c$) of the pipe layer (the so-called BX-factor) is 900 %$^2$ or more, $\beta_{av}$ and $X_c$ as measured by wide angle X-ray diffraction.

$$\mathrm{BX} = \beta_{av} * X_c$$

More preferably, the BX-factor is 1000 %$^2$ or more, still more preferably is 1200 %$^2$ or more, still more preferably is 1400 %$^2$ or more, still more preferably is 1500 %$^2$ or more, and most preferably is 1650 %$^2$ or more. The BX-factor gives a measure for both the total crystallinity and the average beta-crystallinity and is proportional to the impact strength.

Furthermore, for the pipes according to the invention, the pipe falling weight impact H50, determined according to the standard test method EN 1411 on a diameter 32 mm pipe with a wall thickness of 3 mm at 0°C, H50 is preferably 800 mm or more, more preferably 900 mm or more, still more preferably 1000 mm or more, and most preferably 1100 mm or more.

The polypropylene base resins employed in the present invention cover both homopolymers or copolymers of propylene. Preferably, the base resin is a copolymer of propylene and one or more alpha-olefins. The alphaolefin is preferably selected from ethylene, 1-butene, 1-pentene, 1-hexene, 4-methyl- 1-pentene and 1-octene.

In a further preferred embodiment, the polypropylene copolymer base resin employed is a random copolymer. In case of random copolymers, it is preferred that only minor amounts of comonomer are incorporated into the propylene chains; preferably less than 10 wt% of the copolymer base resin, more preferably less than 5 wt%, of other alpha-olefins than propylene are in the polymer. The comonomer is preferably at least ethylene.

According to a preferable embodiment, the propylene polymer has long isotactic sequences and an even distribution of said isotactic sequences within the polymer chain.

The melt flow rate MFR$_2$ of the polypropylene base resin is preferably from 0.05 to 10.0 g/10 min, more preferably from 0.1 to 5 g/10 min and most preferably from 0.2 to 2.0 g/10 min. The MFR$_2$ is measured according to the standard test method ISO 1133 at 230 °C and 2.16 kg.

In a preferred embodiment, the polypropylene base resin is a multimodal polymer base resin, although also a mono-modal base resin may be used. A polymer base resin is referred to as "multimodal", when it comprises at least two polymer fractions, which have been produced under different polymerisation conditions resulting in different (weight average) molecular weights for the fractions. The prefix "multi" relates to the number of different polymer fractions the base resin consists of. Thus, for example, a base resin consisting of two fractions is called "bimodal".

The propylene polymer base resins are polymerised in the presence of a polymerisation catalyst from propylene, optionally together with one or more co-monomers. If the propylene polymer consists of one component only, the process is a single-stage process.

In principle, any polymerisation method including solution, slurry and bulk polymerisation or gas phase polymerisation can be used for producing the propylene polymer. Mixed liquid-gas techniques are preferred in a specific embodiment. In the present application, the term "bulk" means polymerisation in a reaction medium comprising at least 60 wt% monomer. Examples of propylene polymers obtained by polymerisation with a Ziegler-Natta catalyst system, e.g. by slurry, bulk or gas phase polymerisation, are propylene polymers as described in EP-A 0 790 262, WO 99/24 478 and WO 99/16 797.

The preferable method for producing a multimodal polypropylene is a multi-stage process, wherein each or part of the components are blended in situ during the polymerisation process. However, the polypropylene base resin may also be a mechanical blend, wherein two or more separately produced propylene polymer components and optional additives are blended mechanically in a manner known in the art.

A preferred multi-stage process as described above is a loop-gas phase process (such as developed by Borealis A/S, Denmark, known as Borstar® technology) as described inter alia in EP 0 887 379 and WO 92/12182, respectively. These documents are included herein by reference. In the case of random copolymers, the comonomer can be introduced in any of the steps in the above preferred multi-stage process.

Further preferably, the propylene polymer base resin is obtainable by a metallocene catalyst system or a Ziegler Natta catalyst, more preferably by a high yield 4$^{th}$ or 5$^{th}$ generation Ziegler Natta catalyst, which comprises a catalyst component, a co-catalyst component and at least one electron donor (internal and/or an external electron donor, preferably at least external donor). Preferably, the catalyst component is a Ti-Mg based catalyst component and typically the co-catalyst is Al-alkyl based compound. Examples of usable catalysts are referred to in US 5 234 879, WO 92/19653, WO 92/19658 and WO 99/33843. Preferable, external donors are known silane-based donors, preferably dicyclopentyl dimethoxy silane or cyclohexyl methyl dimethoxy silane.

The composition preferably is produced in a process comprising a compounding step, wherein the composition of the base resin, i.e. the blend, which is typically obtained as a base resin powder from the reactor, is extruded in an extruder and then pelletised to polymer pellets in a manner known in the art.

The extruder may be e.g. any conventionally used compounding or extruder unit, preferably is a co-rotating or counter-rotating twin screw extruder, or an internal mixer such as a Banburry type mixer. Preferably, the extruder unit is a single screw extruder such as a Buss Co-kneader, i.e. a single screw mixer with a downstream discharge single screw extruder including a pelletising unit. Static mixers such as Kenics, Koch, etc. can also be used.

Preferably, the nucleating agents are melt mixed into the polypropylene base resin at any process stage known in the art, preferably during compounding or extrusion of the polypropylene composition to afford the polypropylene compositions for the invention, alternatively directly during pipe extrusion, in which latter case it is necessary to use either a highly mixing extruder configuration like a twin-screw extruder or a static mixer to ensure proper and homogeneous dispersion.

The beta-nucleating agents used in the PP compositions can be any nucleating agents, which are suitable for inducing crystallization of polypropylene homo- and copolymers in the hexagonal or pseudo-hexagonal modification. Mixtures of such nucleating agents may also be employed. Such nucleating agents are disclosed in EP 1 364 986 and are incorporated herein by reference. Preferred beta-nucleating agents are any one or mixtures of N,N'-dicyclohexyl-2,6-naphtalene dicarboxamide, the beta-nucleating agents of EP 177961 and those of EP 682066.

Particularly preferred beta-nucleating agents are any one or mixtures of a mixed crystal of 5,12-dihydro-quino(2,3 b)acridine-7,14-dione with quino(2,3 b)acridine-6,7,13,14 (5H, 12H)-tetrone, N,N'-dicyclohexyl-2,6-naphtalene dicarboxamide and salts of dicarboxylic acids with at least 7 carbon atoms with metals of group IIa of the periodic table.

Moreover, the polypropylene composition may also comprise additives as evident for a skilled person in the art, which can preferably be employed in amount of 0.01 to 5 wt% . The additives can be added to the composition in the desired amount at any stage known in the art, which is preferably before or during the compounding or extrusion step of the polymer composition prior to pelletisation. Alternatively, the additives may be blended into the composition immediately prior to extrusion of the pipes.

Suitable additives are preferably stabilizers and/or processing agent adhesives and/or anti-oxidants and/or fillers and/or antistatic agents and/or pigments and/or reinforcing agents, e.g. glass fibres, aramide fibres in each case based on the propylene composition used.

The stabilizers contained in the propylene polymer compositions, preferably are mixtures of phenolic antioxidants, 3-arylbenzofuranones, processing stabilizers based on phosphates, high temperature stabilizers based on disulfides and thioethers and/or sterically hindered amines (HALS).

The composition may also comprise up to 6 wt% of carbon black in the total polymer composition or another UV stabilizer for better UV resistance and can be of natural colour or coloured during or before processing. For the present invention colouration of the propylene composition is largely irrelevant, however certain pigments, e.g. pigments which are highly active alpha-nucleating agents, cannot be utilised.

Fillers may be present in the polypropylene compositions in an amount of 1 to 50 wt%, preferably 5 to 20 wt% of the total polymer composition. Suitable fillers are mica, calcium carbonate, glass spheres, wollastonite, wood flour, zinc oxide, barium sulphate, clay and the like. Preferred fillers are mica and/or calcium carbonate.

If mica is used as filler, the mica has a weight average particle size of about $\leq 12\ \mu$m, preferably $\leq 9\ \mu$m, most preferably $\leq 7\ \mu$m, and a density of 2.5 to 2.9 g/cm$^3$. The amount of mica in the composition is 1 to 50 wt%, more preferably 4 to 30 wt%, most preferably 7 to 25 wt% of the total polymer composition.

Suitable calcium carbonate has a weight average particle size of $\leq 8\ \mu$m preferably $\leq 5\ \mu$m, most preferably $\leq 3\ \mu$m. The amount of calcium carbonate in the composition is 1 to 70 wt%, preferably 10 to 70 wt%, most preferably 15 to 60 wt% of the total polymer composition.

The average particle size must be limited to relatively low values, because with too large particles, the good mechanical properties of the compositions are lost, since large particles tend to induce cracks. Further, the impact properties are lowered as well as the long term properties.

Figure 1 shows the direct proportionality between impact strength and average beta-crystallinity for the pipe examples.

The present invention is further illustrated by means of the following examples.

## Examples

1. Definitions and Measurement methods

The terms and determination methods for the measured properties used for defining the invention apply generally both for the description section above and for the examples and claims below, unless otherwise stated:

**a) WAXS analysis and beta-crystallinity:** The total crystallinity and beta-phase content of the PP was determined from WAXS (Wide Angle X-ray Scattering) scans of plate specimens of 200 $\mu$m thickness mechanically prepared from the produced pipes (cf. Moore, J., Polypropylene Handbook, p. 134-135, Hanser Publishers Munich 1996). The WAXS patterns were recorded with a Philips X'Pert Pro goniometer using Cu K$\alpha$ radiation of 40 kV acceleration voltage and recording in a 2$\Theta$ range of 10 to 30° with steps of 0.02°. The measurements were done in reflection with a divergence slit of 0.5° and a graphite monochromator. Before calculation of the peak areas the amorphous halo as determined on a sample of completely atactic polypropylene was subtracted from the overall diffraction pattern.

The relative beta-crystallinity of the polymorphous PP can be calculated via the $K_\beta$ - value of Turner Jones et al. (cf. Turner Jones et al., Makromol. Chem. 1964, 75, 134-54). Herein $K_\beta$ is defined according to:

$$K_\beta = \frac{I_{(300)\beta}}{I_{(300)\beta} + I_{(110)a} + I_{(040)a} + I_{(130)a}}$$

The $I_{(hkl)}$ represent the diffraction intensity of the (hkl) lattice plane of the $\alpha$ and beta-form crystals. Thus, the intensity peak $I_{(300)\beta}$ represents the 300-plane of the beta-crystals, whereas the $1_{(110)\alpha}$, $I_{(040)\alpha}$ and $I_{(130)\alpha}$ factors represent the 110, 040 and 130-planes of the alpha-crystals, respectively. Accordingly, K = 1 for the full P and K = 0 for the full $\alpha$ modification.

The overall crystallinity $X_c$ is determined by:

$$X_C = \frac{A_C}{A_C + A_A}$$

Herein, $A_C$ and $A_A$ are the areas under the crystalline peaks ($A_C$) and amorphous halo ($A_A$), respectively.

The absolute beta-crystallinity is given by: $\beta_{abs} = K_\beta * X_C$.

The absolute beta-crystallinity for the pipes was measured close to the inner side and the outer side of the pipe wall in zones of 200 $\mu$m depth to afford $\beta_{abs,\ in}$ and $\beta_{abs,\ out}$, respectively.

The average absolute beta-crystallinity of the pipes $\beta_{av}$ is the arithmetic average between $\beta_{abs,\ in}$ and $\beta_{abs,\ out}$:

$$\beta_{av} = \frac{\beta_{abs,in} + \beta_{abs,out}}{2}$$

**b) Melt flow rate MFR$_2$:** measured for the PP composition according to ISO 1133 (230 °C, 2.16 kg load). The melt flow rate is that quantity of polymer in grams, which the test apparatus standardized to ISO 1133 extrudes within 10 minutes at a temperature of 230 °C under a weight of 2.16 kg.

**c) Pipe falling weight test:** This test was used to determine the impact strength of the pipes produced. The pipe falling weight is determined according to EN 1411 on diameter 32 mm pipes with a wall thickness of 3 mm at 0°C. The H50-value is calculated in millimeters.

2. Production and Analysis of Pipes

The raw materials used for pipe production either are commercially available or can be produced according to or analogously to known methods described in the literature, unless otherwise specified.

The pipe examples and the comparative examples were produced using the polymer composition Beta-PPR™ RA7050, which is a commercially available beta-nucleated polypropylene random copolymer with ethylene from *Borealis A/S*. Beta-PPR™ RA7050 has a density of 905 kg/m$^3$ and a melt flow rate MFR$_2$ of 0.3 g/10min.

Beta-PPR™ RA7050 pellets were supplied to a single screw extruder to produce pipes of 32mm*3mm in diameter and thickness, respectively.

The specific extrusion parameters applied in Examples 1 to 5 as well as Comparative Example 1 are given in Table 1.

After extrusion, the pipes leaving the annular die were taken off over a calibrating mandrel, introduced into a cooling chamber and passed through said chamber. Here, the pipes were subjected to the subsequent cooling and annealing steps as indicated in Table 1.

In cooling step b) of all examples/comparative example 1, the spray cooling efficiency was such that a cooling rate of about 2 K/s was obtained in the middle of the pipe wall.

After the cooling and annealing steps indicated in Table 1, the pipes were subjected to WAXS analysis and pipe falling weight test. The results of these tests are summarized in Table 2.

**3. Results**

First, in contrast to the examples illustrating the invention, the extrusion temperature in Comparative Example 1 was only 193 °C compared to 206 °C and higher in the examples of the invention. Otherwise, the processing conditions after extrusion were identical to those of Example 1. It can be seen from the results given in Table 2, that the impact strength of the pipe of Example 1 was very much improved, as indicated by the H50 value of 967 mm compared to the value of only 150 mm for the pipe of Comparative Example 1.

Furthermore, the pipe of Example 1 also displayed a higher average beta-crystallinity of 25.1 % (compared to 9.2 % for the pipe of Comparative Example 1), and also the BX-factor very much improved (1254.5 %$^2$ compared to only 450.8%$^2$).

Table 1:

| | Example 1 | Example 2 | Example 3 | Example 4 | Example 5 | Comp. Ex. 1 |
|---|---|---|---|---|---|---|
| **Screw speed [rpm]** | 60 | 60 | 60 | 56 | 56 | 60 |
| **Die pressure [bar]** | 130 | 117 | 128 | 123 | 123 | 148 |
| **Melt temps. [°C]** | 206 | 229 | 208 | 208 | 208 | 193 |
| **Line speed [m/min]** | 3.19 | 3.2 | 3.2 | 3.1 | 3.1 | 3.2 |

(continued)

| | Example 1 | Example 2 | Example 3 | Example 4 | Example 5 | Comp. Ex. 1 |
|---|---|---|---|---|---|---|
| **Cooling Step b)** | 25°C | 25°C | 25°C | 23°C | 23°C | 25°C |
| | spray cooling 3 m | spray cooling 3 m | spray cooling 3 m | spray cooling 3 m | spray cooling 3 m | spray cooling 3 m |
| | residence time 57 s | residence time 57 s | residence time 57 s | residence time 57 s | residence time 57 s | residence time 57 s |
| **Cooling Step b2)** | 25°C | 25°C | 25°C | 30°C | 30°C | 25°C |
| | Ambient air 3 m | Ambient air 3 m | Ambient air 3 m | Ambient air 3 m | Ambient air 3 m | ambient air 3 m |
| | residence time 57 s | residence time 57 s | residence time 57 s | residence time 57 s | residence time 57 s | residence time 57 s |
| **Annealing Step c)** | 25°C | 25°C | 85°C | 70°C | 83°C | 25°C |
| | water bath 2 m | water bath 2 m | water bath 2 m | water bath 2 m | water bath 2 m | water bath 2 m |
| | residence time 38 s | residence time 38 s | residence time 38 s | residence time 38 s | residence time 38 s | residence time 38 s |

Table 2:

| | | WAXS analysis | | absolute beta-crystallinity | average beta-crystallinity | | Impact strength |
|---|---|---|---|---|---|---|---|
| | | $K_{beta}$ | $X_C$ | Beta | $Beta_{av}$ | BX-factor | H50 |
| | | % | % | % | % | $\%^2$ | mm |
| Ex. 1 | inside | 81 | 50 | 40.5 | 25.1 | 1254.5 | 967 |
| | outside | 22 | 44 | 9.68 | | | |
| Ex. 2 | inside | 90 | 55 | 49.5 | 30.3 | 1665.7 | 1200 |
| | outside | 27 | 41 | 11.07 | | | |
| Ex. 3 | inside | 85 | 57 | 48.45 | 28.6 | 1631.6 | 1350 |
| | outside | 22 | 40 | 8.8 | | | |
| Ex. 4 | inside | 88 | 55 | 48.4 | 27.7 | 1524.3 | 936 |
| | outside | 19 | 37 | 7.03 | | | |
| Ex. 5 | inside | 89 | 55 | 48.95 | 27.6 | 1515.3 | 1107 |
| | outside | 15 | 41 | 6.15 | | | |
| C. Ex. 1 | inside | 20 | 49 | 9.8 | 9.2 | 450.8 | 150 |
| | outside | 20 | 43 | 8.6 | | | |

**Claims**

1. A process for producing a pipe comprising at least one layer made of a polypropylene composition comprising a beta-nucleated polypropylene base resin, wherein the process comprises the steps of:

   a) extrusion of the polypropylene composition at a temperature of above 200 °C,
   b) subsequent cooling of the extruded product with a cooling medium having a temperature of above 5 °C, and
   c) subsequent annealing of the extruded product with an annealing medium having a temperature of at least the cooling medium temperature of step b).

2. A process according to claim 1 wherein the polypropylene composition comprises a beta-nucleating agent in an amount of from 20 to 10 000 ppm

3. A process according to claims 1 or 2, wherein step b) comprises spray cooling of the extruded product.

4. A process according to any of the preceding claims, wherein in step b) the residence time is between 2 s and 400 s.

5. A process according to any of the preceding claims, wherein an additional intermediate cooling step b2) is performed between steps b) and c).

6. A process according to claim 5, wherein step b2) comprises exposing the extruded product to air.

7. A process according to claim 6, wherein the air has a temperature of at least the temperature of the cooling medium of step b).

8. A process according to any of claims 5 to 7, wherein in step b2) the residence time is between 2 s and 400 s.

9. A process according to any of the preceding claims, wherein in step c) the extruded product is annealed with an annealing medium with a temperature of 25 °C or higher.

10. A process according to any of the preceding claims, wherein step c) comprises annealing of the extruded product in a water bath.

11. A process according to any of the preceding claims, wherein in step c) the residence time is between 2 s and 300 s.

12. A process according to any of the preceding claims, wherein the cooling rate in the middle of the pipe wall during the cooling stage b) is below 10 K/s.

13. A pipe produced by the process according to any of the proceeding claims comprising at least one layer made of a propylene polymer composition, wherein the average absolute beta-crystallinity of the pipe layer, $beta_{av}$ is higher or equal to 20 %

14. A pipe according to claim 13 wherein the propylene polymer composition comprises a beta-nucleating agent in an amount of 20 to 10 000 ppm.

15. A pipe according to claim 13 or 14, wherein the relative beta-crystallinity, $K_\beta$, measured in a zone of 200 micrometer depth from the inner side of the pipe layer according to the WAXS method is 65 % or higher.

16. A pipe according to any of claims 13 to 15, wherein the absolute beta-crystallinity, measured in a zone of 200 $\mu$m depth from the inner side of the pipe layer, $\beta_{abs}$, in, according to the WAXS method is 32 % or more.

17. A pipe according to any of claims 13 to 16, wherein the BX-factor of the pipe layer which is the product of the average beta-crystallinity ($\beta_{av}$) and the total crystallinity ($X_c$) is 900 %$^2$ or more.

18. A pipe according to any of claims 13 to 17, wherein the pipe has a pipe falling weight impact H50 value, determined according to EN 1411 on a diameter 32 mm pipe with a wall thickness of 3 mm at 0 °C, of 800 mm or more.

**Patentansprüche**

1. Verfahren zur Herstellung eines Rohrs, das zumindest eine Schicht aufweist, die aus einer Polypropylenzusammensetzung erzeugt worden ist, die ein der β-Keimbildung unterzogenes Polypropylen-Grundharz umfaßt, wobei das Verfahren die Schritte umfaßt:

   a) Extrudieren der Polypropylenzusammensetzung bei einer Temperatur von mehr als 200°C,
   b) anschließendes Abkühlen des extrudierten Produktes mit einem Kühlmittel mit einer Temperatur von mehr als 5°C und

c) anschließendes Tempern des extrudierten Produktes mit einem Mittel zum Tempern, das eine Temperatur von zumindest der des Kühlmittels vom Schritt b) hat.

2. Verfahren nach Anspruch 1, wobei die Polypropylenzusammensetzung einen β-Keimbildner in eine Menge von 20 bis 10.000 ppm umfaßt.

3. Verfahren nach Anspruch 1 oder 2, wobei der Schritt b) das Kühlen durch Besprühen des extrudierten Produktes umfaßt.

4. Verfahren nach einem der vorstehenden Ansprüche, wobei die Verweilzeit im Schritt b) 2 bis 400 s beträgt.

5. Verfahren nach einem der vorstehenden Ansprüche, wobei zwischen den Schritten b) und c) ein zusätzlicher Zwischenkühlschritt b2) vorgenommen wird.

6. Verfahren nach Anspruch 5, wobei das extrudierte Produkt im Schritt b2) Luft ausgesetzt wird.

7. Verfahren nach Anspruch 6, wobei die Luft eine Temperatur hat, die zumindest die des Kühlmittels vom Schritt b) ist.

8. Verfahren nach einem der vorstehenden Ansprüche 5 bis 7, wobei die Verweilzeit im Schritt b2) 2 bis 400 s beträgt.

9. Verfahren nach einem der vorstehenden Ansprüche, wobei das extrudierte Produkt im Schritt c) mit einem Mittel zum Tempern mit einer Temperatur von 25°C oder darüber getempert wird.

10. Verfahren nach einem der vorstehenden Ansprüche, wobei der Schritt c) das Tempern des extrudierten Produktes in einem Wasserbad umfaßt.

11. Verfahren nach einem der vorstehenden Ansprüche, wobei die Verweilzeit im Schritt c) 2 bis 300 s beträgt.

12. Verfahren nach einem der vorstehenden Ansprüche, wobei die Abkühlungsrate in der Mitte der Wand des Rohres während des Abkühlungsschrittes b) unter 10 K/s liegt.

13. Rohr, das nach dem Verfahren nach einem der vorstehenden Ansprüche hergestellt ist, das zumindest eine Schicht umfaßt, die aus einer Propylenpolymerzusammensetzung erzeugt worden ist, wobei die durchschnittliche absolute ß-Kristallinität der Rohrschicht, $ß_{av}$, größer als oder gleich 20 % ist.

14. Rohr nach Anspruch 13, wobei die Propylenpolymerzusammensetzung einen β-Keimbildner in einer Menge von 20 bis 10.000 ppm umfaßt.

15. Rohr nach Anspruch 13 oder 14, wobei die relative β-Kristallinität, $K_ß$, 65 % oder mehr beträgt, und zwar gemäß dem WAXS-Verfahren in einer Zone von 200 $\mu$m Tiefe von der Innenseite der Rohrschicht gemessen.

16. Rohr nach einem der Ansprüche 13 bis 15, wobei die absolute ß-Kristallinität, $ß_{abs}$, in, 32 % oder mehr beträgt, und zwar gemäß dem WAXS-Verfahren in einer Zone von 200 $\mu$m Tiefe von der Innenseite der Rohrschicht gemessen.

17. Rohr nach einem der Ansprüche 13 bis 16, wobei der BX-Faktor der Rohrschicht, der das Produkt der durchschnittlichen β-Kristallinität ($ß_{av}$) und der gesamten Kristallinität ($X_c$) ist, 900 %$^2$ oder mehr beträgt.

18. Rohr nach einem der Ansprüche 13 bis 17, wobei das Rohr einen Wert H50 für ein auf das Rohr aufschlagendes Gewicht von 800 mm oder mehr aufweist, und zwar gemäß EN 1411 bei einem Rohr mit einem Durchmesser von 32 mm mit einer Wanddicke von 3mm bei 0 °C gemessen.

**Revendications**

1. Procédé de production d'un tuyau comprenant au moins une couche faite d'une composition de polypropylène comprenant une résine de base de polypropylène à bêta-nucléation, lequel procédé comprend les étapes :

a) d'extrusion de la composition de polypropylène à une température supérieure à 200°C,

b) puis le refroidissement du produit extrudé avec un milieu de refroidissement ayant une température supérieure à 5°C, et

c) ensuite le recuit du produit extrudé avec un milieu de recuit ayant une température au mois égale à la température du milieu de refroidissement de l'étape b).

2. Procédé selon la revendication 1 dans lequel la composition de polypropylène comprend un agent de bêta-nucléation en quantité de 20 à 10 000 ppm.

3. Procédé selon les revendications 1 ou 2, dans lequel l'étape b) comprend le refroidissement par atomisation du produit extrudé.

4. Procédé selon l'une quelconque des revendications précédentes, dans lequel, dans l'étape b), le temps de séjour est compris entre 2 s et 400 s.

5. Procédé selon l'une quelconque des revendications précédentes, dans lequel une étape de refroidissement intermédiaire supplémentaire b2) est réalisée entre les étapes b) et c).

6. Procédé selon la revendication 5, dans lequel l'étape b2) comprend l'exposition à l'air du produit extrudé.

7. Procédé selon la revendication 6, dans lequel l'air a une température au moins égale à la température du milieu de refroidissement de l'étape b).

8. Procédé selon l'une quelconque des revendications 5 à 7, dans lequel, dans l'étape b2), le temps de séjour est compris entre 2 s et 400 s.

9. Procédé selon l'une quelconque des revendications précédentes, dans lequel, dans l'étape c), le produit extrudé est recuit avec un milieu de recuit ayant une température d'au moins 25°C.

10. Procédé selon l'une quelconque des revendications précédentes, dans lequel l'étape c) comprend le recuit du produit extrudé dans un bain d'eau.

11. Procédé selon l'une quelconque des revendications précédentes, dans lequel, dans l'étape c), le temps de séjour est compris entre 2 s et 300 s.

12. Procédé selon l'une quelconque des revendications précédentes, dans lequel la vitesse de refroidissement au milieu de la paroi du tuyau pendant l'étape de refroidissement b) est inférieure à 10 K/s.

13. Tuyau produit par le procédé selon l'une quelconque des revendications précédentes, comprenant au moins une couche faite d'une composition de polymère de propylène, dans lequel la bêta-cristallinité absolue moyenne de la couche de tuyau, bêta$_{moy}$, est supérieure ou égale à 20%.

14. Tuyau selon la revendication 13, dans lequel la composition de polymère de propylène comprend un agent de bêta-nucléation en quantité de 20 à 10 000 ppm.

15. Tuyau selon la revendication 13 ou 14, dans lequel la bêta-cristallinité relative, $K_\beta$, mesurée dans une zone de 200 micromètres de profondeur depuis l'intérieur de la couche de tuyau selon la méthode WAXS, est d'au moins 65%.

16. Tuyau selon l'une quelconque des revendications 13 à 15, dans lequel la bêta-cristallinité absolue, mesurée dans une zone de 200 $\mu$m de profondeur depuis l'intérieur de la couche de tuyau, $\beta_{abs,\ in}$, selon la méthode WAXS, est d'au moins 32%.

17. Tuyau selon l'une quelconque des revendications 13 à 16, dans lequel le facteur BX de la couche de tuyau qui est le produit de la bêta-cristallinité moyenne ($\beta_{moy}$) et de la cristallinité totale ($X_c$), est d'au moins 900%$^2$.

18. Tuyau selon l'une quelconque des revendications 13 à 17, dans lequel le tuyau a une valeur H50 de choc de poids de chute de tuyau, déterminée selon EN 1411 sur un tuyau de 32 mm de diamètre ayant une épaisseur de paroi de 3 mm à 0°C, d'au moins 800 mm.

**Fig. 1:**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0682066 B2
- WO 03094832 A2
- WO 03102069 A
- EP 1364986 A1
- US 5387386 A
- FI 83184
- EP 0790262 A
- WO 9924478 A
- WO 9916797 A

- EP 0887379 A
- WO 9212182 A
- US 5234879 A
- WO 9219653 A
- WO 9219658 A
- WO 9933843 A
- EP 1364986 A
- EP 177961 A
- EP 682066 A

**Non-patent literature cited in the description**

- **CHEN et al.** *Polymer,* 2002, vol. 43, 6505-14
- **FUJIYAMA et al.** *Intern. Polym. Proc.,* 1996, vol. 11, 271-4
- **DJORDJEVIC, D.** Coextrusion. *Rapra Review Reports,* 1992, vol. 6 (2), 51-53

- Plastic Extrusion Technology. Hanser Publishers, 1997
- **MOORE, J.** Polypropylene Handbook. Hanser Publishers, 1996, 134-135
- **TURNER JONES et al.** *Makromol. Chem.,* 1964, vol. 75, 134-54